# EUROPÄISCHE PATENTANMELDUNG

(11) **EP 3 875 173 A1**
(43) Veröffentlichungstag der Anmeldung: **08.09.2021**
(21) Anmeldenummer: 20160824.7
(22) Anmeldetag: 04.03.2020
(51) Int. Cl.: B02C 25/00, B02C 9/04, B02C 11/00, B02C 23/08, B07B 1/28, H02P 3/20

(54) **FUTTER- ODER NAHRUNGSMITTELMÜHLE**

(71) Anmelder: Bühler AG, 9240 Uzwil (CH)
(72) Erfinder: Dürr, Roman, 9500 Wil (CH); Albers, Michael, 9240 Uzwil (CH)
(74) Vertreter: Hepp Wenger Ryffel AG

(57) **Zusammenfassung**

Die vorliegende Erfindung betrifft eine Futter- oder Nahrungsmittelmühle, beispielsweise Getreidemühle (1), umfassend mindestens einen Elektromotor (6, 6', 6") und mindestens eine Einheit (3, 3', 4), welche mindestens ein Bauteil (7, 7', 7") aufweist, das durch den Elektromotor (6, 6', 6") in Schwingungen versetzt werden kann, wobei der mindestens eine Elektromotor (6, 6', 6") derart konfiguriert ist, dass er zum Abbremsen für einen vorgegebenen Zeitraum in entgegengesetzter Drehrichtung betrieben werden kann.

## Beschreibung

Die vorliegende Erfindung betrifft eine Mahlanlage, welche sich durch eine verbesserte Maschinenstopp-Anordnung auszeichnet.

Futter- oder Nahrungsmittelmühlen, beispielsweise Getreidemühlen oder Mühlen zur Herstellung anderer Nahrungsmittel wie Schokolade, finden Anwendung bei der Verarbeitung von Futter- oder Nahrungsmitteln, beispielsweise Getreide, Getreidevermahlungsprodukten und Getreideendprodukte der Müllerei (insbesondere Vermahlen von Weichweizen, Durum, Roggen, Mais und/oder Gerste) oder Spezialmüllerei (insbesondere Schälen und/oder Vermahlen von Soja, Buchweizen, Gerste, Dinkel, Hirse/Sorghum, Pseudocerealien und/oder Hülsenfrüchten), bei der Herstellung von Futter für Nutz- und Haustiere, Fische und Krustentiere, bei der Verarbeitung von Ölsaaten; bei der Verarbeitung von Biomasse und Herstellung von Energiepellets, in industriellen Mälzerei- und Schroterei-Anlagen, sowie bei der Verarbeitung von Kakaobohnen, Nüssen und Kaffeebohnen. Derartige Mahlanlagen sind bekannt.

Getreidemühlen umfassen üblicherweise einen oder mehrere Walzenstühle, in welchen das Getreide zerkleinert und gemahlen wird, als auch verschiedene Reinigungseinheiten wie Plansichter oder Griessputzmaschinen.

Bei diesen Reinigungseinheiten wird üblicherweise eine Trennung von Abstoss und gewünschtem Produkt (beispielsweise Griess oder Mehl) durch einen Siebvorgang erreicht. Hierbei wird ein Bauteil der Reinigungseinheit (beispielsweise ein Siebboden) in Schwingungen/Vibrationen versetzt. Die Schwingungen/Vibrationen werden mit Hilfe eines Elektromotors erzeugt und auf das entsprechende Bauteil übertragen.

Wenn der Betrieb der Getreidemühle angehalten oder unterbrochen werden soll, wird auch der Motor abgeschaltet, welcher die vorstehend beschriebenen Schwingungen/Vibrationen erzeugt. Während dieses Abschaltvorgangs kommt es jedoch aufgrund der hierbei auftretenden Vibrationsänderungen zu einer unkontrollierten und übermässigen Bewegung der bewegten Bauteile. Als Folge werden beim Anhalten der Maschine unkontrollierbare und damit unvorhersehbare mechanische Schläge auf die Maschine (oder Teile davon). Schlagen hierbei Metallteile auf Metallteile, kann es zu erheblichen Beschädigungen in der Getreidemühle kommen. Dies führt zu erhöhtem Verschleiss und zu einer Verkürzung der Lebensdauer der Getreidemühle.

Zudem ist der Abschaltvorgang der Getreidemühle mit einer erheblichen und unangenehmen Geräuschentwicklung verbunden.

Im Stand der Technik werden Gummibeschläge verwendet, um die Folgen der unkontrollierten und übermässigen Bewegung der bewegten Bauteile während des Abschaltvorgangs zu reduzieren. Diese Gummibeschläge (oder andere geeignete Dämpfungselemente) werden an entsprechenden Positionen in der Getreidemühle montiert, um zumindest die Konsequenzen des Schlagens von Metallteilen auf Metallteilen zu mindern.

Diese Lösung ist jedoch suboptimal, da sie lediglich die Folgen der unkontrollierten und übermässigen Bewegung der bewegten Bauteile während des Abschaltvorgangs zu reduzieren versucht, und das Problem der erheblichen und unangenehmen Geräuschentwicklung überhaupt nicht zu lösen vermag.

Die gleichen Probleme treten auch bei anderen Mahlanlagen im Futter- oder Nahrungsmittelbereich auf, bei denen Mahl- und/oder Siebeinheiten vorhanden sind, welche analog zu den vorstehend beschriebenen Einheiten einer Getreidemühle bewegt werden müssen.

Es war die Aufgabe der vorliegenden Erfindung, eine Futter- oder Nahrungsmittelmühle bereitzustellen, welche nicht unter den vorstehend beschriebenen Nachteilen beim Abschalten leidet.

Die vorstehende Aufgabe wird durch eine erfindungsgemässe Futter- oder Nahrungsmittelmühle gelöst.

Die vorliegende Erfindung betrifft eine Futter- oder Nahrungsmittelmühle wie eine Getreidemühle, umfassend
mindestens einen Elektromotor und
mindestens eine Einheit, welche mindestens ein Bauteil aufweist, das durch den Elektromotor in Schwingungen versetzt werden kann, dadurch gekennzeichnet, dass
der mindestens eine Elektromotor derart konfiguriert ist, dass er zum Abbremsen für einen vorgegebenen Zeitraum in entgegengesetzter Drehrichtung betrieben werden kann.

Wie vorstehend erläutert wurde im Stand der Technik als unvermeidlich hingenommen, dass es beim Abschalten einer Futter- oder Nahrungsmittelmühle wie einer Getreidemühle zu einer unkontrollierten und übermässigen Bewegung der bewegten Bauteile und einer damit verbundenen erheblichen Geräuschentwicklung und mechanischen Belastung von Bauteilen kommt. Es wurde lediglich der Einsatz von Gummidämpfern zur Linderung der auftretenden Symptome implementiert, aber trotz eines offensichtlichen, über einen längeren Zeitraum bestehenden Bedürfnisses niemals eine grundsätzliche Überwindung des Problems in Betracht gezogen.

Es hat sich gezeigt, dass ein sanfter Stopp des Betriebs einer Futter- oder Nahrungsmittelmühle wie einer Getreidemühle möglich ist, wenn die Elektromotoren, welche die schwingungsfähigen Einheiten einer Getreidemühle in Schwingung versetzen, zum Abbremsen für einen vorgegebenen Zeitraum in entgegengesetzter Drehrichtung betrieben werden.

Futter- oder Nahrungsmittelmühlen sind bekannt. Getreidemühlen umfassen zum Beispiel üblicherweise einen oder mehrere Walzenstühle, in welchen das Getreide zerkleinert und gemahlen wird, als auch verschiedene Reinigungseinheiten wie Plansichter oder Griessputzmaschinen.

Ein beispielhafter Aufbau einer Getreidemühle besteht darin, dass das zu mahlende Schüttgut zunächst in einen Brechwalzenstuhl geführt und das darin zerkleinerte Schüttgut in einer ersten Reinigungsstufe, beispielsweise einem Plansichter, in einen sogenannten Abstoss (den Teil des Schüttguts, welcher nicht durch das Sieb fällt) sowie Mehl und/oder Griess aufgetrennt. Plansichter sind ebenfalls hinlänglich bekannt. En Plansichter ist durch einen Siebboden ausgezeichnet, welcher schwingfähig in einem Rahmen angeordnet ist.

Anfallender Griess wird anschliessend in einer zweiten Reinigungsstufe in einer Griessputzmaschine gesäubert, beispielsweise durch Aspiration, und von Verunreinigungen wie Weizenkernkeimen und Schaltenteilen befreit. Griessputzmaschinen sind ebenfalls hinlänglich bekannt, beispielsweise aus der DE-41 26 065 A1. Eine Griessputzmaschine weist ebenfalls mindestens ein schwingfähig gelagertes Sieb auf.

Der so gereinigte Griess wird anschliessend in einem Ausmahlwalzenstuhl fertig gemahlen.

Eine Getreidemühle kann mehrere Prozesszüge aus Brechwalzenstuhl, Plansichter, Griessputzmaschine und Ausmahlwalzenstuhl umfassen, wobei vorzugsweise Ausstoss und Verunreinigungen wie Weizenkernkeime und Schaltenteile aus einem ersten Prozesszug zur weiteren Verarbeitung in einen nachfolgenden Prozesszug eingeleitet werden können.

Neben den vorstehend genannten Komponenten kann eine Getreidemühle weitere Einheiten wie zusätzliche Reinigungsmaschinen umfassen. Es ist auch möglich, dass eine Getreidemühle nicht alle der vorstehend beschriebenen Komponenten enthält.

Futter- oder Nahrungsmittelmühlen finden Verwendung
- zur Verarbeitung von Getreide, Getreidevermahlungsprodukten und Getreideendprodukten der Müllerei (insbesondere Vermahlen von Weichweizen, Durum, Roggen, Mais und/oder Gerste) oder Spezialmüllerei (insbesondere Schälen und/oder Vermahlen von Soja, Buchweizen, Gerste, Dinkel, Hirse/Sorghum, Pseudocerealien und/oder Hülsenfrüchten),
- zur Herstellung von Futter für Nutz- und Haustiere, Fische und Krustentiere,
- zur Verarbeitung von Ölsaaten;
- zur Verarbeitung von Biomasse und Herstellung von Energiepellets,
- in industriellen Mälzerei- und Schroterei-Anlagen, sowie
- zur Verarbeitung von Kakaobohnen, Nüssen und Kaffeebohnen.

Eine erfindungsgemässe Futter- oder Nahrungsmittelmühle wie eine Getreidemühle umfasst mindestens eine Einheit, welche mindestens ein Bauteil aufweist, das durch den Elektromotor in Schwingungen versetzt werden kann. Hierbei handelt es vorzugsweise um eine Einheit, welche ausgewählt ist aus der Gruppe bestehend aus einer Reinigungsmaschine, einem Plansichter, einer Griessputzmaschine, und Kombinationen hiervon.

Erfindungsgemäss ist es nicht erforderlich, diese Einheiten wie im Stand der Technik vorgesehen mit Gummidämpfungsmitteln zu versehen. Derartige Gummidämpfungsmittel können aber zur Risikoverminderung für Notfälle dennoch vorgesehen sein.

Bei dem Bauteil, das durch einen Elektromotor in Schwingungen versetzt werden kann, handelt es sich vorzugsweise um ein schwingfähig gelagertes Sieb. Derartige Bauteile sind hinlänglich bekannte. Beispielsweise kann es sich um einen Siebboden handeln, welcher schwingfähig in einem Rahmen gelagert ist.

Eine erfindungsgemässe Futter- oder Nahrungsmittelmühle wie eine Getreidemühle umfasst mindestens einen Elektromotor. Dieser Elektromotor dient dazu, die vorstehend beschriebene mindestens eine Einheit, welche mindestens ein Bauteil aufweist, das durch den Elektromotor in Schwingungen versetzt werden kann, in Schwingungen zu versetzen.

Erfindungsgemäss kann jeder Elektromotor verwendet werden, der im Stand der Technik in Futter- oder Nahrungsmittelmühlen wie Getreidemühlen zu diesem Zweck zum Einsatz kommt. Bevorzugt sind Drehstrommotoren.

Erfindungsgemäss bevorzugt werden pro Einheit, welche in Schwingungen versetzt werden kann, zwei Elektromotoren bereitgestellt.

Erfindungsgemäss bevorzugt ist jeder verwendete Elektromotor mit einem Hauptschütz versehen. Ein Hauptschütz ist ein elektrisch oder elektromagnetisch betreibbarer Schalter, der zwischen Stellungen geschaltet werden kann. Schütze sind bekannt. Ein Schütz umfasst üblicherweise eine Spule, einen in der Spule angeordneten Anker, der durch ein von der Spule erzeugtes magnetisches Feld bewegt werden kann, sowie einen mit dem Anker bewegbaren Kontaktschlitten. Der Kontaktschlitten verbindet beziehungsweise trennt die Kontakte des Schützes, je nach seiner Position.

Der Hauptschütz dient zur Steuerung des Elektromotors (Drehmotors). Während des Betriebs der Futter- oder Nahrungsmittelmühle, beispielsweise Getreidemühle, ist der Hauptschütz geschaltet (d.h. durch die Spule fliesst elektrischer Strom und der Anker bewegt den Kontaktschlitten in Kontaktstellung), der Elektromotor wird in eine Richtung in Drehung versetzt, und die entsprechenden Einheiten der Futter- oder Nahrungsmittelmühle, beispielsweise Getreidemühle, werden in Schwingungen versetzt.

Wird die Futter- oder Nahrungsmittelmühle, beispielsweise Getreidemühle gestoppt, beispielweise durch Betätigen eines entsprechenden Schalters, fällt der Hauptschütz ab, d.h. die Spule wird nicht mehr mit elektrischem Strom versorgt und Anker und Kontaktschlitten bewegen sich in die Grundstellung zurück.

Erfindungsgemäss wird verhindert, dass die Drehung des Elektromotors nun langsam kleiner wird. Dies führt nämlich zu dem aus dem Stand der Technik bekannten Nachteil einer unkontrollierten und übermässigen Bewegung der bewegten Bauteile.

Vielmehr ist erfindungsgemäss ein Elektromotor derart konfiguriert, dass er zum Abbremsen für einen vorgegebenen Zeitraum in entgegengesetzter Drehrichtung betrieben werden kann. Da der Elektromotor während des Abbremsens sich immer noch, wenngleich langsamer werdend, in seine normale Drehrichtung bewegt, führt dies nicht zu einer tatsächlichen Umkehrung der Richtung der Drehbewegung des Elektromotors. Vielmehr wird dadurch erreicht, dass der Motor innerhalb kürzester Zeit zum Stillstand kommt.

Auf diese Weise werden die während einer langsamen Abbremsphase auftretende unkontrollierte und übermässige Bewegung von Bauteilen und die damit verbundene Geräuschentwicklung eliminiert.

Es sind grundsätzlich verschiedene Möglichkeiten denkbar, die Drehbewegung eines Elektromotors umzukehren. Erfindungsgemäss bevorzugt wird das Betreiben des mindestens einen Elektromotors in entgegengesetzter Drehrichtung durch Umkehr von zwei elektrischen Phasen eines Drehstrommotors erreicht.

Drehstrommotoren werden mit Dreiphasenwechselstrom betrieben, wobei die Phasen des Wechselstroms jeweils um 120° zueinander verschoben sind. Kehrt man zwei dieser drei Phasen um, kommt es zu einer Umkehrung der Drehbewegung des Motors.

Dieses Prinzip ist aus dem Stand der Technik bekannt. Beispielsweise ist es in der US-1,161,932 beschrieben. Dort erfolgt die Phasenumkehr mit Hilfe eines manuell zu bedienenden Schalters.

Auch in der CN-103441710 A1 ist dieses Prinzip für ein völlig anderes Gerät (Asphaltmischstation) beschrieben. Für Futter- oder Nahrungsmittelmühlen wie Getreidemühlen ist es aber bislang nicht zur Anwendung gekommen.

Erfindungsgemäss bevorzugt erfolgt die Umkehr der zwei elektrischen Phasen des mindestens einen Elektromotors mit einem Wendeschütz.

Ein Wendeschütz ist ebenfalls hinlänglich bekannt und dient zur Änderung der Drehrichtung eines Elektrodrehmotors. Er ist analog zu einem Hauptschütz aufgebaut. Wir der Wendeschütz geschaltet (was nur bei abfallendem Hauptschütz möglich ist), werden mit seiner Hilfe Kontakte zwischen Stromversorgung und Motor verbunden, welche zu einer Umkehr von zwei Phasen des angelegten Stroms und somit zu einer Umkehr der Drehrichtung eines Elektrodrehmotors führen.

Um etwaige erhebliche Beschädigungen an der Futter- oder Nahrungsmittelmühle, beispielsweise Getreidemühle, zu verhindern, darf es während des Abbremsens nicht zu einer tatsächlichen Drehung des Elektromotors in entgegengesetzter Richtung kommen. Die Umkehr der Drehrichtung darf daher nur für einen vorgegebenen Zeitraum erfolgen und muss rechtzeitig beendet werden.

Erfindungsgemäss bevorzugt wird eine Timer-Einheit zur Einstellung und Kontrolle des vorgegebenen Zeitraums für das Abbremsen bereitgestellt. Es handelt sich hierbei um eine Einheit, beispielweise ein elektronisches Bauteil, mit welcher nach einer vorgegebenen Zeit der Wendeschütz abfallend gestellt werden kann.

Zusätzlich können weitere Bauteile wie beispielsweise ein Wiederanlauf-Relais oder Signalleuchten (beispielsweise für Betrieb oder Fehleranzeige) bereitgestellt sein.

Die vorliegende Erfindung wird nachstehend anhand von nicht einschränkenden Zeichnungen und Ausführungsformen näher erläutert.

Es zeigen:
- Fig. 1: eine schematische Darstellung einer Ausführungsform einer erfindungsgemäss einsetzbaren Getreidemühle
- Fig. 2: eine schematische Darstellung einer Ausführungsform einer Schaltung zum Betreiben einer erfindungsgemässen Futter- oder Nahrungsmittelmühle, beispielsweise Getreidemühle

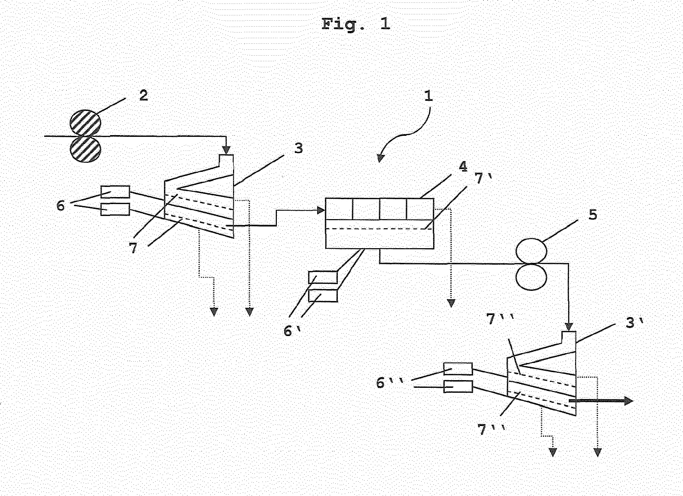

In Fig. 1 ist eine schematische Darstellung einer Ausführungsform einer erfindungsgemäss einsetzbaren Getreidemühle 1 gezeigt. Das zu mahlende Schüttgut wird entlang des durchgezogenen Pfades durch die Anlage 1 geführt. Zunächst wird das Schüttgut in einem Brechwalzenstuhl mit 2 Walzen mit geriffelter Oberfläche (Riffelwalzen) zerkleinert und anschliessend in einen ersten Plansichter 3 mit schwingfähig gelagerten Siebböden 7 überführt. Dort werden Mehl sowie Verunreinigungen abgetrennt und wie durch die gestrichelten Pfade angedeutet in andere (nicht gezeigte) Abschnitte der Getreidemühle geleitet.

Der Griess wird in eine Griessputzmaschine 4 mit schwingfähig gelagertem Siebboden 7' überführt und dort gesäubert und von Verunreinigungen getrennt, welche wie durch den gestrichelten Pfad angedeutet in andere (nicht gezeigte) Abschnitte der Getreidemühle geleitet werden.

Der gereinigte Griess wird in einen Ausmahlwalzenstuhl 5 überführt, welcher ein Glattwalzenpaar umfasst. Das gemahlene Produkt wird schliesslich in einem zweiten Plansichter 3' mit schwingfähig gelagerten Siebböden 7" überführt. Dort werden Verunreinigungen abgetrennt und wie durch die gestrichelten Pfade angedeutet in andere (nicht gezeigte) Abschnitte der Getreidemühle geleitet. Das fertige Produkt verlässt wie durch den dicken Pfeil angedeutet die Getreidemühle 1.

Die Plansichter 3, 3' sowie die Griessputzmaschine 4 sind mit jeweils zwei Elektromotoren 6, 6', 6" verbunden, welche schwingfähige gelagerte Siebböden 7, 7', 7" in den Plansichtern 3, 3' sowie der Griessputzmaschine 4 in Schwingungen versetzen können.

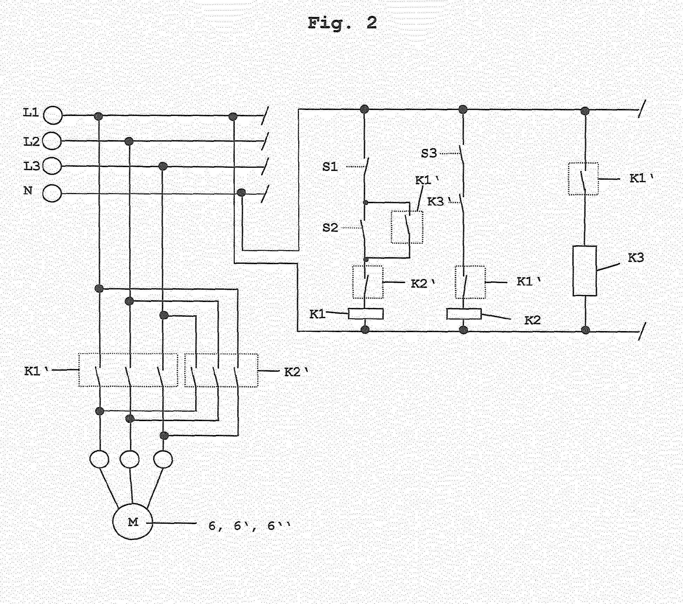

In Fig. 2 ist eine schematische Darstellung einer Ausführungsform einer Schaltung zum Betreiben einer erfindungsgemässen Futter- oder Nahrungsmittelmühle, beispielsweise Getreidemühle gezeigt. Ein Motor M (welcher einer der Motoren 6, 6', 6" ist) ist mit den Hauptphasen L1, L2, L3 einer Starkstromleitung verbunden. Durch Betätigen des Schalters S1 wird an den Hauptschütz K1 Strom angelegt. Durch Betätigen des Hauptschützschalters S2 werden alle Kontakte K1' des Hauptschützes K1 in Fig. 2 schematisch dargestellt nach rechts bewegt, wodurch der Motor M über die Kontakte K1' des Hauptschützes K1 mit den Hauptphasen L1, L2, L3 einer Starkstromleitung verbunden wird. Der Wendeschütz K2 ist hingegen abgefallen, da der Kontakt K1' vor dem Wendeschütz K2 nicht geschlossen ist.

Durch erneutes Betätigen des Hauptschalters S1 wird der Hauptschütz K1 von der Stromversorgung abgekoppelt und fällt ab (d.h. in Fig. 2 schematisch dargestellt bewegen sich alle Kontakte K1' des Hauptschützes K1 nach links in die Grundstellung). Die Kontakte K1' zwischen dem Motor M und den Hauptphasen L1, L2, L3 werden dadurch geöffnet.

Ein Timer K3 wird nun aktiviert; dieser schliesst den Kontakt K3' zum Wendeschütz K2. Der Wendeschütz K2 schaltet (d.h. alle Kontakte K2' bewegen sich in Fig. 2 schematisch dargestellt nach rechts) und schliesst die Kontakte K2' zwischen dem Motor M und den Hauptphasen L1, L2, L3. Hierbei werden, wie aus Fig. 2 ersichtlich, zwei Phasen miteinander vertauscht, wodurch der Motor M zu einer entgegensetzten Drehbewegung veranlasst wird.

Nach einer vorgegebenen Zeit gibt der Timer K3 erneut ein Signal ab, wodurch sich der Kontakt K3' öffnet und der Wendeschütz K2 abfällt (d.h. alle Kontakte K2' bewegen sich in Fig. 2 schematisch dargestellt nach links). Es werden nun auch die Kontakte K2 zwischen dem Motor M und den Hauptphasen L1, L2, L3 geöffnet, und der Motor M ist vollständig von der Stromversorgung abgekoppelt. Es findet keine weitere Drehbewegung des Motors M in entgegengesetzte Richtung statt.

## Patentansprüche

1. Futter- oder Nahrungsmittelmühle, beispielsweise Getreidemühle (1), umfassend
mindestens einen Elektromotor (6, 6', 6") und
mindestens eine Einheit (3, 3', 4), welche mindestens ein Bauteil (7, 7', 7") aufweist, das durch den Elektromotor (6, 6', 6") in Schwingungen versetzt werden kann,
**dadurch gekennzeichnet, dass**
der mindestens eine Elektromotor (6, 6', 6") derart konfiguriert ist, dass er zum Abbremsen für einen vorgegebenen Zeitraum in entgegengesetzter Drehrichtung betrieben werden kann.

2. Futter- oder Nahrungsmittelmühle (1) nach Anspruch 1,
**dadurch gekennzeichnet, dass** das Betreiben des mindestens einen Elektromotors (6, 6', 6") in entgegengesetzter Drehrichtung durch Umkehr von zwei elektrischen Phasen des mindestens einen Elektromotors (6, 6', 6") erreicht werden kann.

3. Futter- oder Nahrungsmittelmühle (1) nach Anspruch 2,
**dadurch gekennzeichnet, dass** ein Wendeschütz (K2) für die Umkehr von zwei elektrischen Phasen des mindestens einen Elektromotors (6, 6', 6") bereitgestellt ist.

4. Futter- oder Nahrungsmittelmühle (1) nach einem der vorhergehenden Ansprüche, **dadurch gekennzeichnet, dass** eine Timer-Einheit (K3) zur Einstellung und Kontrolle des vorgegebenen Zeitraums für das Abbremsen bereitgestellt ist.

5. Futter- oder Nahrungsmittelmühle (1) nach einem der vorhergehenden Ansprüche, **dadurch gekennzeichnet, dass** die mindestens eine Einheit (3, 3', 4), welche durch den Elektromotor (6, 6', 6") in Schwingungen versetzt werden kann, ausgewählt ist aus der Gruppe bestehend aus einer Reinigungsmaschine, einem Plansichter (3, 3'), einer Griessputzmaschine (4), und Kombinationen hiervon.

6. Futter- oder Nahrungsmittelmühle (1) nach einem der vorhergehenden Ansprüche, **dadurch gekennzeichnet, dass** das Bauteil (7, 7', 7"), das durch den Elektromotor (6, 6', 6") in Schwingungen versetzt werden kann, ein schwingfähig gelagertes Sieb (7, 7', 7") ist.

7. Futter- oder Nahrungsmittelmühle (1) nach einem der vorhergehenden Ansprüche, **dadurch gekennzeichnet, dass** pro Einheit (3, 3', 4), welche in Schwingungen versetzt werden kann, zwei Elektromotoren (6, 6', 6") bereitgestellt sind.

8. Verfahren zum Betreiben einer Futter- oder Nahrungsmittelmühle, beispielsweise Getreidemühle (1), vorzugsweise gemäss einem der Ansprüche 1 bis 7, umfassend die Schritte
a) Erzeugung von Schwingungen mit Hilfe mindestens eines Elektromotors (6, 6', 6") und Übertragung dieser Schwingungen auf mindestens eine Einheit (3, 3', 4), welche ein schwingfähiges Bauteil (7, 7', 7") aufweist,
b) Anhalten des Betriebs der Mühle (1) durch Betreiben des mindestens einen Elektromotors (6, 6', 6") zum Abbremsen für einen vorgegebenen Zeitraum in entgegengesetzter Drehrichtung.

9. Verfahren nach Anspruch 8, **dadurch gekennzeichnet, dass** das Betreiben des mindestens einen Elektromotors (6, 6', 6") zum Abbremsen für einen vorgegebenen Zeitraum in entgegengesetzter Drehrichtung durch Umkehr von zwei elektrischen Phasen des mindestens einen Elektromotors (6, 6', 6") durchgeführt wird.

10. Verfahren nach Anspruch 9, **dadurch gekennzeichnet, dass** die Umkehr von zwei elektrischen Phasen des mindestens einen Elektromotors (6, 6', 6") über einen Wendeschütz (K2) erfolgt.

11. Verfahren nach einem der Ansprüche 8 bis 10, **dadurch gekennzeichnet, dass** der Zeitraum für das Abbremsen durch eine Timer-Einheit (K3) vorgegeben wird.

12. Verfahren nach einem der Ansprüche 8 bis 11, **dadurch gekennzeichnet, dass** in Schritt a) ein Bauteil (7, 7', 7") einer Einheit (3, 3', 4), ausgewählt aus der Gruppe bestehend aus einer Reinigungsmaschine, einem Plansichter (3, 3'), einer Griessputzmaschine (4), und Kombinationen hiervon, in Schwingungen versetzt wird.

13. Verfahren nach Anspruch 12, **dadurch gekennzeichnet, dass** das in Schritt a) in Schwingungen versetzte Bauteil (7, 7', 7") ein schwingfähig gelagertes Sieb (7, 7', 7") ist.

14. Verwendung einer Futter- oder Nahrungsmittelmühle, beispielsweise Getreidemühle (1), gemäss einem der Ansprüche 1 bis 7
- zur Verarbeitung von Getreide, Getreidevermahlungsprodukten und Getreideendprodukten der Müllerei (insbesondere Vermahlen von Weichweizen, Durum, Roggen, Mais und/oder Gerste) oder Spezialmüllerei (insbesondere Schälen und/oder Vermahlen von Soja, Buchweizen, Gerste, Dinkel, Hirse/Sorghum, Pseudocerealien und/oder Hülsenfrüchten),
- zur Herstellung von Futter für Nutz- und Haustiere, Fische und Krustentiere,
- zur Verarbeitung von Ölsaaten;
- zur Verarbeitung von Biomasse und Herstellung von Energiepellets,
- in industriellen Mälzerei- und Schroterei-Anlagen, sowie
- zur Verarbeitung von Kakaobohnen, Nüssen und Kaffeebohnen.
